# EUROPEAN PATENT SPECIFICATION

(11) **EP 2 366 527 B1**
(45) Date of publication and mention of the grant of the patent: **17.02.2016**
(21) Application number: 10811835.7
(22) Date of filing: 24.08.2010
(51) Int. Cl.: B29C 47/08, B29C 47/14, B29C 47/00

(54) **RUBBER EXTRUSION NOZZLE**
KAUTSCHUKEXTRUSIONSDÜSE
BUSE D'EXTRUSION DE CAOUTCHOUC

(30) Priority: 25.08.2009 JP 2009194505
(43) Date of publication of application: 21.09.2011
(73) Proprietor: Sumitomo Rubber Industries, Ltd., Kobe-shi, Hyogo 651-0072 (JP)
(72) Inventor: NAKAMURA Yoshinobu, Kobe-shi Hyogo 651-0072 (JP)
(74) Representative: Manitz, Finsterwald & Partner GbR
(86) International application number: PCT/JP2010/064242
(87) International publication number: WO 2011/024785

(56) References cited:
- WO-A2-99/58314
- JP-A- S5 147 981
- JP-A- 51 047 981
- JP-A- 52 129 989
- JP-A- 2002 127 234
- JP-A- 2002 514 524
- JP-A- 2006 069 018
- JP-A- 2008 238 625
- JP-A- 2008 238 625
- JP-Y- 38 002 586

## Description

### TECHNICAL FIELD

The present invention relates to a rubber extrusion die which enables prevention of deformation of a rubber member upon extrusion. The features of the preamble of the independent claim are known from WO 99/58314 A2. Related technologies are known from JP 2008 238625 A and JP S51 47981 A.

### BACKGROUND ART

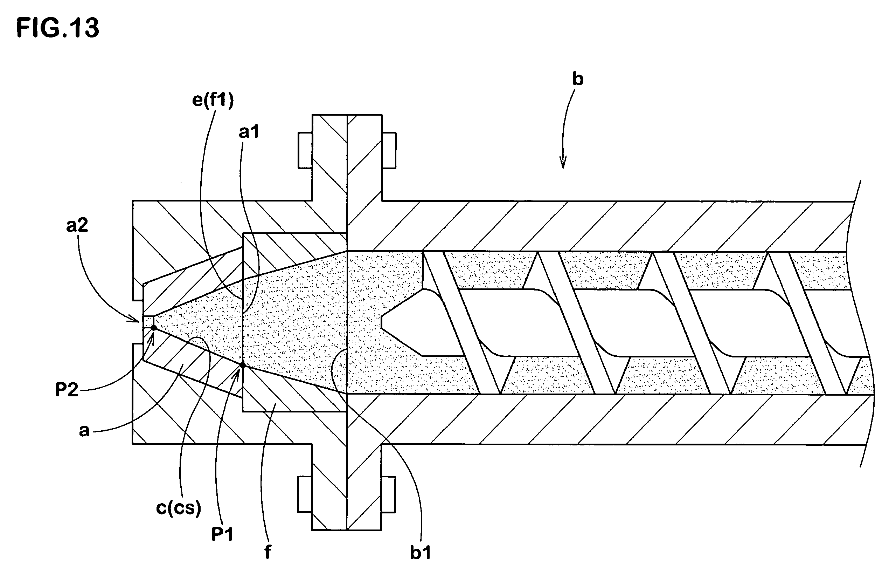

As schematically shown in FIG. 13, a rubber extrusion die a mounted to a front end of a rubber extrusion apparatus includes an inflow opening section a1 through which rubber extruded from a rubber extruder b flows; a forming opening section a2 which forms inflowing rubber and which discharges the rubber as a rubber member having a predefined cross-sectional shape; and a rubber flow path c extending from the inflow opening section a1 to the forming opening section a2 in a forward rubber-extruding direction, while a cross-sectional area of the flow path decreases in the forward rubber-extruding direction.

An opening shape of the forming opening section a2 determines the final shape of the rubber member, and forms a predefined cross-sectional shape, the design of which takes into consideration die swell, which is a result of expansion of rubber after extrusion. On the other hand, an opening shape of the inflow opening section a1 is configured in a form and size to match an opening shape of a rubber extrusion opening e on a side of the rubber extruder b that is adjacent to the inflow opening section a1. when a front end of the rubber extruder b is connected to the die a via a pre-former f as in the case in said figure, a discharge opening f1 of the pre-former f corresponds to the rubber extrusion opening e. when the die a is directly connected to the front end of the rubber extruder b, a discharge opening b1 of the rubber extruder b corresponds to the rubber extrusion opening e.

Here, when the inflow opening section a1 is smaller than the rubber extrusion opening e on the rubber extruder b side, there is a problem in that rubber accumulates at a part connecting the inflow opening section a1 and the rubber extrusion opening e, and the accumulated rubber becomes vulcanized. Therefore, it is necessary to match the opening shape of the inflow opening section a1 to the rubber extrusion opening e, which results in an opening area of the inflow opening section a1 being larger than that of the forming opening section a2.

On the other hand, in an attempt to allow a smooth flow of rubber along the rubber flow path c from the inflow opening section a1 to the forming opening section a2, both in a vertical cross section and a horizontal cross section in the rubber-extruding direction, a profile line cs of an inner wall surface along the rubber flow path c is formed as an inclined line linearly extending from a rear end point P1 where the inflow opening section a1 intersects the profile line to a front end point P2 where the forming opening section a2 intersects the profile line (e.g., refer to FIG. 2 in patent literature 1). The same figure representatively illustrates the vertical cross section of the rubber flow path c, and the vertical cross section corresponds to a cross section of a rubber member in a thickness direction.

[Patent Literature 1] Japanese Laid-open Patent Publication No. 2006-82277

### DISCLOSURE OF THE INVENTION

### PROBLEMS TO BE SOLVED BY THE INVENTION

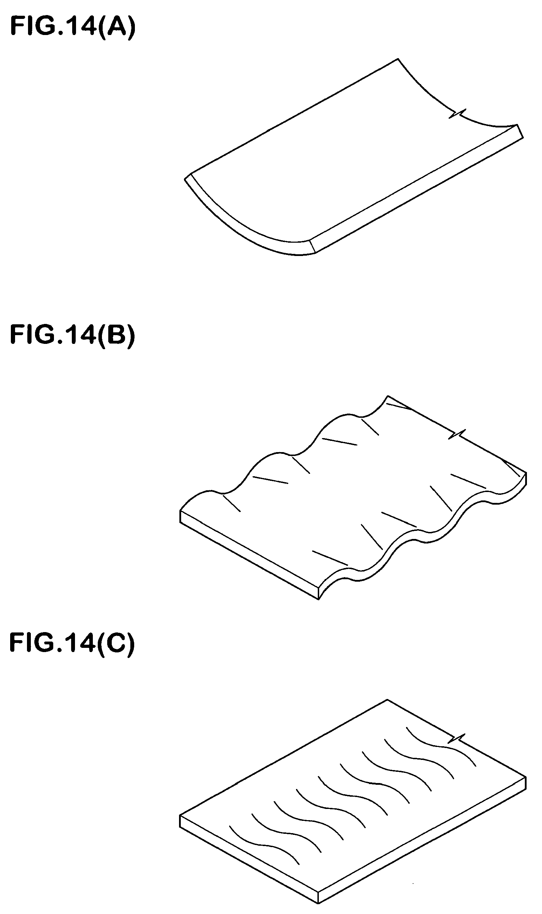

However, in the rubber flow path c in which the profile line cs is an inclined line, it is difficult to create a uniform flow of rubber across the whole opening of the forming opening section a2, since a smoothness of the flow of rubber is disrupted due to friction between the rubber and the inner wall surface along the rubber flow path c. As a result, the rubber member tends to deform, for example, when a flat rubber member having a rectangular cross-sectional shape is extruded: the rubber member may become curved due to an imbalance between the long sides of the rectangle as shown in FIG. 14 (A); or due to a difference of flow rate between the center and the ends of the long sides, the rubber member may become rippled at edges of both ends or instead become rippled at the center as shown in FIG. 14 (B) or (C).

Therefore, an object of the present invention is to provide a rubber extrusion die which enables uniform flow of rubber across the whole opening of the forming opening section by reducing the effect of friction with rubber, and which enables prevention of deformation of the rubber member upon extrusion. In a fundamental configuration of the present invention, a profile line of the inner wall surface along the rubber flow path is formed by a curved line passing through an area outside the inclined line, which passing results in a larger cross-sectional area of the rubber flow path than that obtained by the inclined line.

### SOLUTION TO THE PROBLEMS

In order to solve the above-described problems, a first aspect of the present invention, as defined in the independent claim, is directed to a rubber extrusion die including:
an inflow opening section through which rubber extruded from a rubber extruder flows;
a forming opening section which forms rubber inflowing from the inflow opening section and which discharges the rubber as a rubber member having a predefined cross-sectional shape; and
a rubber flow path extending from the inflow opening section to the forming opening section in a forward rubber-extruding direction, the cross-sectional area of the flow path decreasing in the forward rubber-extruding direction, wherein
in a vertical cross section and/or a horizontal cross section in the rubber-extruding direction of the rubber flow path,
a profile line of an inner wall surface along the rubber flow path passes through an area outside a reference line which is a straight line between a rear end point P1, where the inflow opening section intersects the profile line, and a front end point P2, where the forming opening section intersects the profile line, which passing results in a larger cross-sectional area of the rubber flow path than that obtained by the reference line.

Furthermore, in a second aspect, the forming opening section includes a constant cross-sectional shape portion which has a cross-sectional shape identical to that of the opening shape of the forming opening section and which linearly extends in the rubber-extruding direction for a length L1 of 2-10 mm.

Furthermore, in a third aspect, regarding the inner wall surface of the rubber flow path, only a profile line of the vertical cross section passes through the area outside the reference line, which passing results in a larger cross-sectional area of the rubber flow path than that obtained by the reference line.

Furthermore, in a fourth aspect, regarding the inner wall surface of the rubber flow path, only a profile line of the horizontal cross section passes through the area outside the reference line, which passing results in a larger cross-sectional area of the rubber flow path than that obtained by the reference line.

Furthermore, in a fifth aspect, regarding the inner wall surface of the rubber flow path, in the vertical cross section and the horizontal cross section, respective profile lines pass through the area outside the reference line, which passings result in a larger cross-sectional area of the rubber flow path than that obtained by the reference line.

Furthermore, the profile line of the inner wall surface includes a dividing point P3 which divides an area between the front end point P2 and the rear end point P1 into a front area and a rear area;
a profile line of the front area consists of a front inclined line portion which linearly extends from the front end point P2 to the dividing point P3, and a profile line of the rear area consists of a rear inclined line portion which linearly extends from the dividing point P3 to the rear end point P1; and
in the front inclined line portion, a distance M in the vertical 1 direction of an interval 1 between the front end point P2 and the dividing point P3, is equal to or larger than a distance N in the rubber-extruding direction of the interval.

Furthermore, in an example,
the profile line of the inner wall surface includes a dividing point P3 which divides an area between the front end point P2 and the rear end point P1 into a front area and a rear area;
a profile line of the front area consists of a front arc curved-line portion which extends from the front end point P2 to the dividing point P3 in a convex arc shape having the center of the arc on the rubber flow path side, and a profile line of the rear area consists of a rear inclined line portion which linearly extends from the dividing point P3 to the rear end point P1; and
in the front arc curved-line portion, a distance M in the vertical direction of an interval between the front end point P2 and the dividing point P3, is equal to or larger than a distance N in the rubber-extruding direction of the interval.

Furthermore, in another example, a profile line of the inner wall surface consists of an arc-shaped curved line which smoothly extends from the front end point P2 to the rear end point P1 in a convex arc shape, while a curvature radius of the arc-shaped curved line increases as the arc-shaped curved line extends from the front end point P2 to the rear end point P1.

### EFFECT OF THE INVENTION

In the present invention, in the vertical cross section and/or the horizontal cross section in the rubber-extruding direction of the rubber flow path, a profile line of the inner wall surface is formed as a curved line passing through an area outside a reference line which is defined as a straight line between the rear end point P1, where the inner wall surface along the rubber flow path intersects the inflow opening section, and the front end point P2, where the inner wall surface along the rubber flow path intersects the forming opening section, which passing results in a larger cross-sectional area of the rubber flow path than that obtained by the reference line.

with this, the cross-sectional area of the flow path on the forming opening section side can be increased, and the effect of friction between the inner wall surface and rubber on the flow of rubber can be reduced. As a result, the flow of rubber can be made uniform across the whole opening of the forming opening section, and deformation of the rubber member upon extrusion can be reduced.

### BRIEF DESCRIPTION OF THE DRAWINGS

FIG. 1 is a cross-sectional view of one example of a rubber extrusion die of the present invention.
FIG. 2 illustrates three faces of a rubber extrusion die of a first embodiment.
FIG. 3 is a cross-sectional view, showing a profile line of a rubber flow path in a vertical cross section.
FIG. 4 is a cross-sectional view, showing a profile line of a rubber flow path in a vertical cross section in another example.
FIG. 5 is a cross-sectional view, showing a profile line of a rubber flow path in a vertical cross section in still another example.
FIG. 6 illustrates three faces of a rubber extrusion die of a second embodiment.
FIG. 7 is a cross-sectional view, showing a profile line of a rubber flow path in a horizontal cross section.
FIG. 8 is a cross-sectional view, showing a profile line of a rubber flow path in a horizontal cross section in another example.
FIG. 9 is a cross-sectional view, showing a profile line of a rubber flow path in a horizontal cross section in still another example.
FIG. 10 illustrates three faces of a rubber extrusion die of a third embodiment.
FIG. 11 is a perspective view illustrating a rubber member that is formed by extrusion.
FIG. 12 (A), (B), and (C) are front views of opening shapes of forming opening sections of dies of TABLE 1.
FIG. 13 is a cross-sectional view of a conventional rubber extrusion die.
FIG. 14 (A), (B), and (C) are perspective views explaining deformed bodies of the rubber member.
FIG. 15 illustrates four faces of a die used in A of TABLE 1.
FIG. 16 illustrates four faces of a die used in B of TABLE 1.
FIG. 17 illustrates three faces of a die used in C of TABLE 1.

### DESCRIPTION OF THE REFERENCE CHARACTERS

- 1: rubber extrusion die
- 2: rubber extruder
- 3: inflow opening section
- 4: forming opening section
- 4A: constant cross-sectional shape portion
- 5: rubber flow path
- 5S: inner wall surface
- 15: front inclined line portion
- 16: rear inclined line portion
- 17: front arc curved-line portion
- 20: inclined line portion
- 21: inclined line portion
- 22: arc curved-line portion
- G: rubber
- G1: rubber member
- J: reference line
- Jx: reference line
- Jy: reference line
- K: profile line
- Kx: profile line
- Ky: profile line

### DESCRIPTION OF THE PREFERRED EMBODIMENTS

Embodiments of the present invention will be described in details in the following.

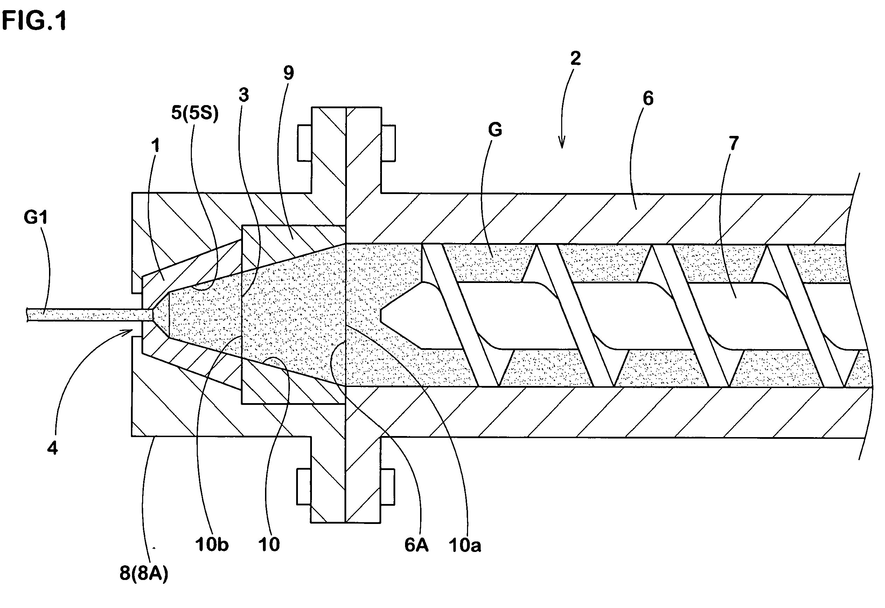

In FIG. 1, a rubber extrusion die 1 (hereinafter, may be referred to as a die 1) of the present embodiment includes an inflow opening section 3 through which rubber G extruded from a rubber extruder 2 flows; a forming opening section 4 which forms the inflowing rubber G, and which discharges the rubber G as a rubber member G1 having a predefined cross-sectional shape; and a rubber flow path 5 extending from the inflow opening section 3 to the forming opening section 4 forward in a rubber-extruding direction.

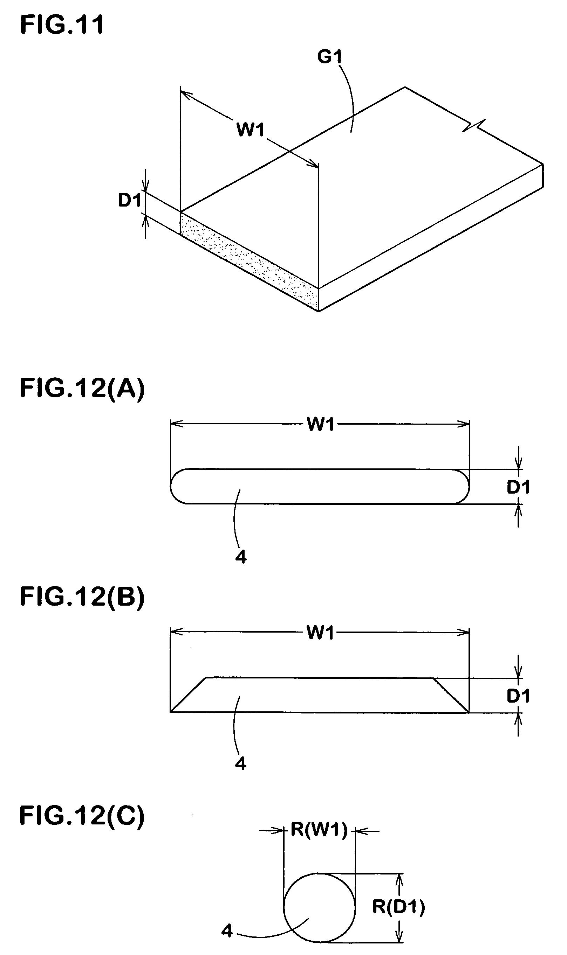

As shown in FIG. 11, the present embodiment illustrates a case where the die 1 forms and extrudes the rubber member G1 with a flat and almost rectangular cross-sectional shape (predefined cross-sectional shape) having a small aspect ratio which is a ratio (D1 / W1) of a thickness D1 and a width W1. However, the present invention is not limited thereto. The present invention is also applicable to rubber members having other cross-sectional shapes, such as a circular or square cross section with an aspect ratio of 1, or a cross section having a high aspect ratio that is close to 1.

In the present embodiment, the rubber extruder 2 is a screw-type extruder having a well-known configuration in which a screw shaft 7 is rotatably housed within a cylinder 6. The rubber G injected from an injection opening (not shown) located at a rear end side of the cylinder 6, is pushed forward while being kneaded as the screw shaft 7 rotates, and is extruded from a discharge opening 6A which opens up at a front end of the cylinder 6.

Furthermore, in the present embodiment, an extrusion head 8 which holds a pre-former 9 and the die 1 is mounted on a front end of the rubber extruder 2. The extrusion head 8 has a head main body 8A which is attached to the front end of the cylinder 6 in a detachable manner, and the block-like pre-former 9 and the die 1 are held within the head main body 8A in an exchangeably manner.

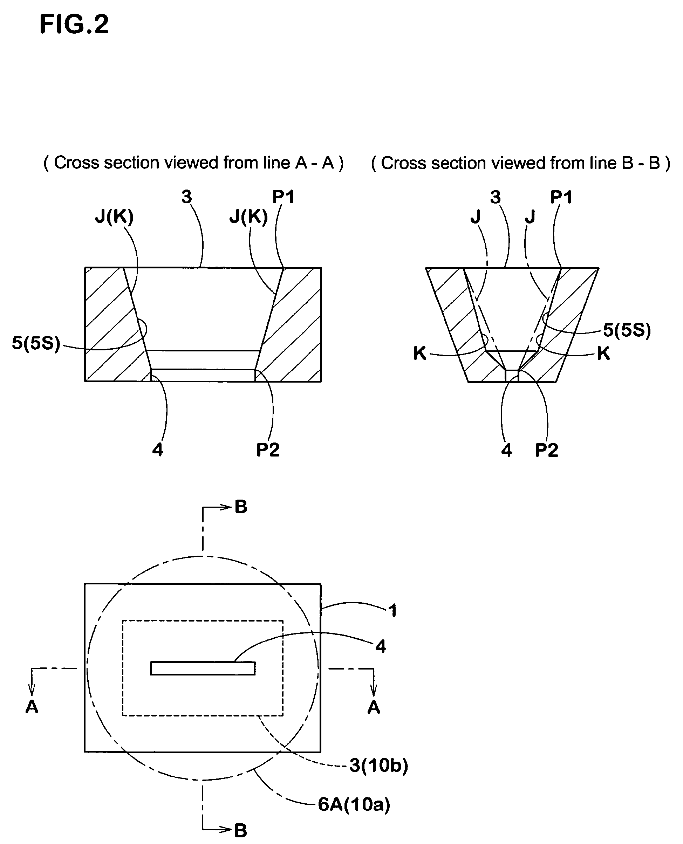

The pre-former 9 includes a pre-forming flow path 10 which pre-forms the rubber G which is extruded from the rubber extruder 2 and has a circular cross section into a shape which has a rectangular cross section; and guides the resulting rubber G to the die 1. As shown in FIG. 2: an opening shape of a rubber inflow opening 10a corresponding to a rear end of the pre-forming flow path 10 is configured so as to have a circular shape which is substantially the same as the discharge opening 6A of the rubber extruder 2; and an opening shape of a rubber discharge opening 10b corresponding to a front end of the pre-forming flow path 10 is formed as, for example, a rectangular shape having a size which is intermediate between the size of the rubber inflow opening 10a and the size of the forming opening section 4 of the die 1. Furthermore, the inflow opening section 3 of the die 1 is formed so as to have an opening shape which is substantially the same as the rubber discharge opening 10b of the pre-former 9.

Referring to FIG. 2, the die 1 of the present invention has a features in which, in a vertical cross section and/or a horizontal cross section in the rubber-extruding direction of the rubber flow path 5, a profile line K of an inner wall surface 5S along the rubber flow path 5 passes through an area outside a reference line J (defined in the following), which passing results in a larger cross-sectional area of the rubber flow path 5 than that obtained by the reference line J. The reference line J is defined as a straight line between a rear end point P1, where the profile line K intersects the inflow opening section 3, and a front end point P2, where the profile line K intersects the forming opening section 4. The vertical cross section refers to the cross section in the thickness direction of the rubber member G1, and the horizontal cross section refers to the cross section in the width direction of the rubber member G1.

In a conventional die, the profile line of the inner wall surface along the rubber flow path is formed along the reference line J. On the other hand, in the die 1, the profile line K is formed by a curved line which passes through an area outside the reference line J. Such a profile line K allows the cross-sectional area of the flow path on the side of the forming opening section 4 to be increased. As a result, the effect of friction between the inner wall surface 5S and rubber on the flow of rubber can be reduced. Furthermore, the flow of rubber is made uniform, which enables deformation of the rubber member upon extrusion to be reduced.

In a first embodiment shown in FIG. 2: only a profile line Ky of the inner wall surface 5S along the rubber flow path 5 in the vertical cross section (shown as a cross section viewed from line B-B in FIG. 2) passes through an area outside a reference line Jy; and a profile line Kx of the inner wall surface 5S along the rubber flow path 5 in the horizontal cross section (shown as a cross section viewed from line A-A in FIG. 2) is formed along a reference line Jx. In such a case where the rubber member G1 is flat having a very small D1 / W1 ratio as in FIG. 11, the profile line Ky in the vertical cross section is defined as described above, since the effect of friction between the rubber and the upper/lower surfaces of the inner wall surface 5S along the rubber flow path 5 becomes significant.

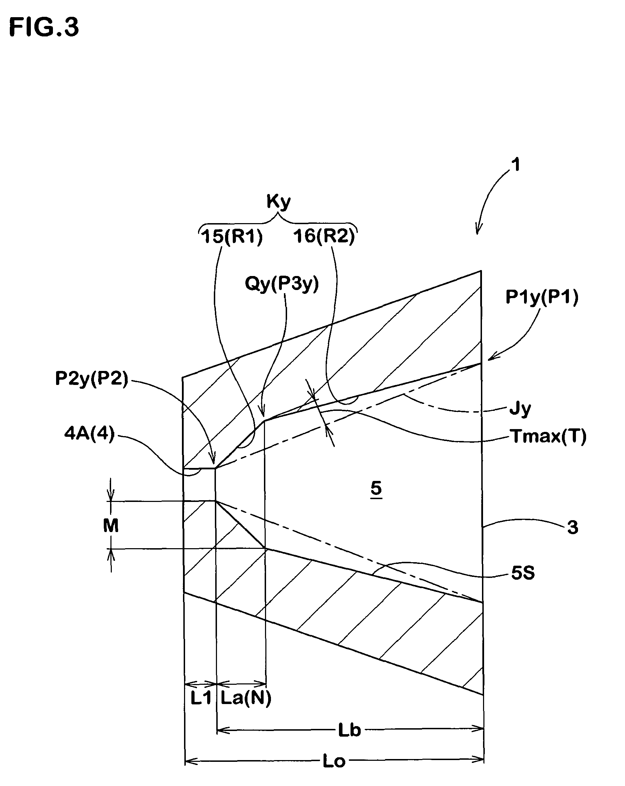

The profile line Ky in the vertical cross section will be described in detail in the following. As shown in FIG. 3, the profile line Ky passes through an area outside the reference line Jy which is defined as a straight line between a rear end point P1y, where the profile line Ky intersects the inflow opening section 3, and a front end point P2y, where the profile line Ky intersects the forming opening section 4. Here, when Qy is defined as a maximum distance point at which a distance T from the reference line Jy to the profile line Ky becomes a maximum Tmax, a distance La from the maximum distance point Qy to the front end point P2y in the rubber-extruding direction is preferably equal to or smaller than 0.5 times a distance Lb between the rear end point P1y and the front end point P2y in the rubber-extruding direction, more preferably equal to or smaller than 0.4 times thereof, and even more preferably equal to or smaller than 0.3 times thereof. Thus, the cross-sectional area of the flow path is increased further toward the side of the forming opening section 4, and therefore the effect of friction on the flow of rubber can be further reduced. Furthermore, in order to achieve the same object, maximum distance Tmax is preferably equal to or larger than 0.4 times the distance La, and more preferably equal to or larger than 0.5 times thereof.

Furthermore, a bent line can be used as the profile line Ky. More specifically, the profile line Ky has a dividing point P3y which divides the area between the front end point P2y and the rear end point P1y into a front area R1 and a rear area R2. The maximum distance point Qy is used as the dividing point P3y. Next, a profile line of the front area R1 is formed by a front inclined line portion 15 which linearly extends from the front end point P2y to the dividing point P3y, and a profile line of the rear area R2 is formed by a rear inclined line portion 16 which linearly extends from the dividing point P3y to the rear end point P1y. In this case, in the front inclined line portion 15, a distance M in the vertical direction of an interval between the front end point P2y and the dividing point P3y, is preferably equal to or larger than a distance N (which corresponds to the distance La) in the rubber-extruding direction of the interval. As described here, when M ≥ N is satisfied, since the cross-sectional area of the flow path is increased further toward the side of the forming opening section 4, the effect of friction on the flow of rubber can be reduced.

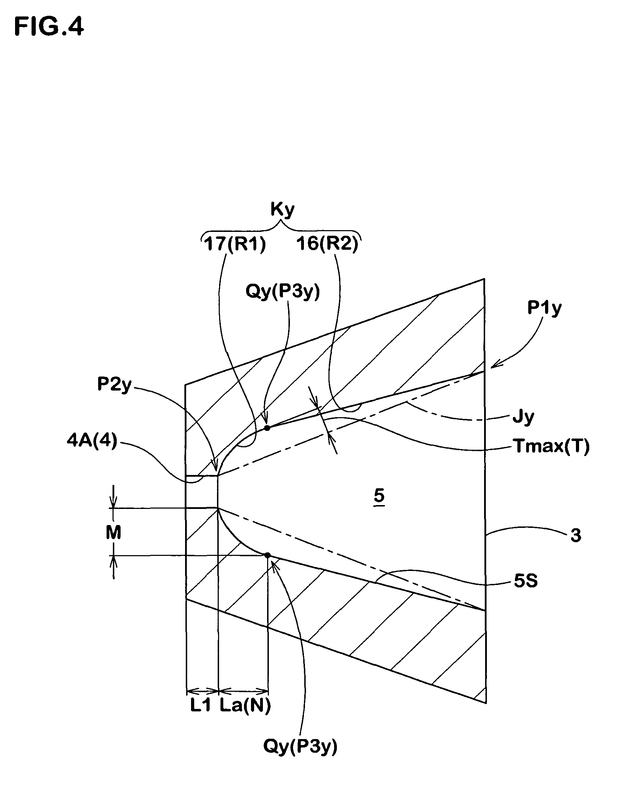

Furthermore, a composite curve can be used as the profile line Ky. More specifically, as shown in FIG. 4, the profile line Ky has the dividing point P3y which divides the area between the front end point P2y and the rear end point P1y into the front area R1 and the rear area R2. The maximum distance point Qy is used as the dividing point P3y. Next, a profile line of the front area R1 is formed by a front arc curved-line portion 17 which extends from the front end point P2y to the dividing point P3y in a convex arc shape having the center of the arc on the rubber flow path 5 side, and the profile line of the rear area R2 is formed by the rear inclined line portion 16 which linearly extends from the dividing point P3y to the rear end point P1y. Also in this case, in the front arc curved-line portion 17, a distance M in the vertical direction of an interval between the front end point P2y and the dividing point P3y, is preferably equal to or larger than a distance N in the rubber-extruding direction of the interval. The front arc curved-line portion 17 is preferably smoothly connected to the rear inclined line portion 16.

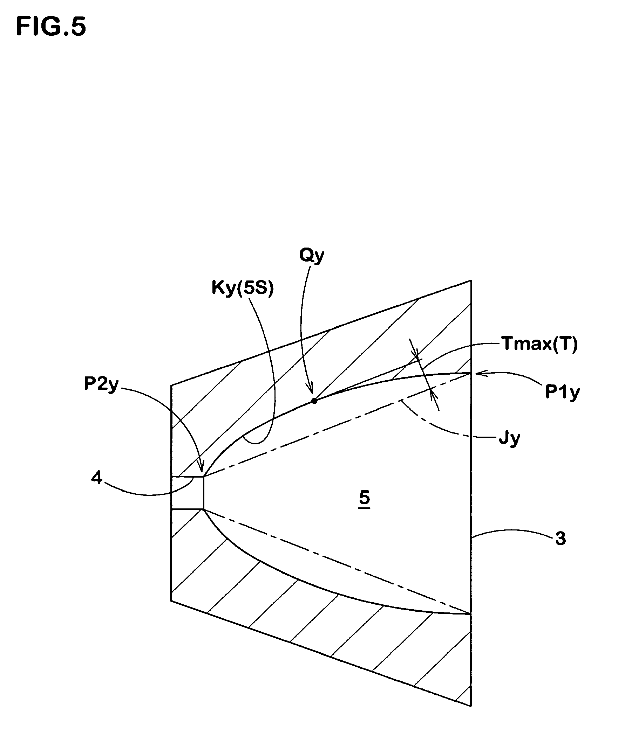

Furthermore, an arch-shaped curved line can be used as the profile line Ky. More specifically, as shown in FIG. 5, the profile line Ky is formed by an arch-shaped curved line which smoothly extends backward in the rubber-extruding direction from the front end point P2y to the rear end point P1y in a convex arc shape, while a curvature radius of the arch-shaped curved line increases as the arch-shaped curved line extends from the front end point P2 to the rear end point P1. For example, an ellipse, a parabola, an involute curve, or the like can be suitably used as the arch-shaped curved line. Other than these embodiments, the arch-shaped curved line can also be formed by connecting multiple arcs having different curvature radii.

Furthermore, in the die 1, the forming opening section 4 includes a constant cross-sectional shape portion 4A which has a cross-sectional shape identical to that of the opening shape of the forming opening section 4 and which linearly extends in the rubber-extruding direction for a length L1 of 2-10 mm. Having the constant cross-sectional shape portion 4A is preferable in order to compensate for the reduction in pressure capacity on the side of the forming opening section 4, which reduction is caused by the profile line Ky being formed by a curved line that is spaced apart from the reference line Jy and is outside the reference line Jy; and maintain durability of the die 1.

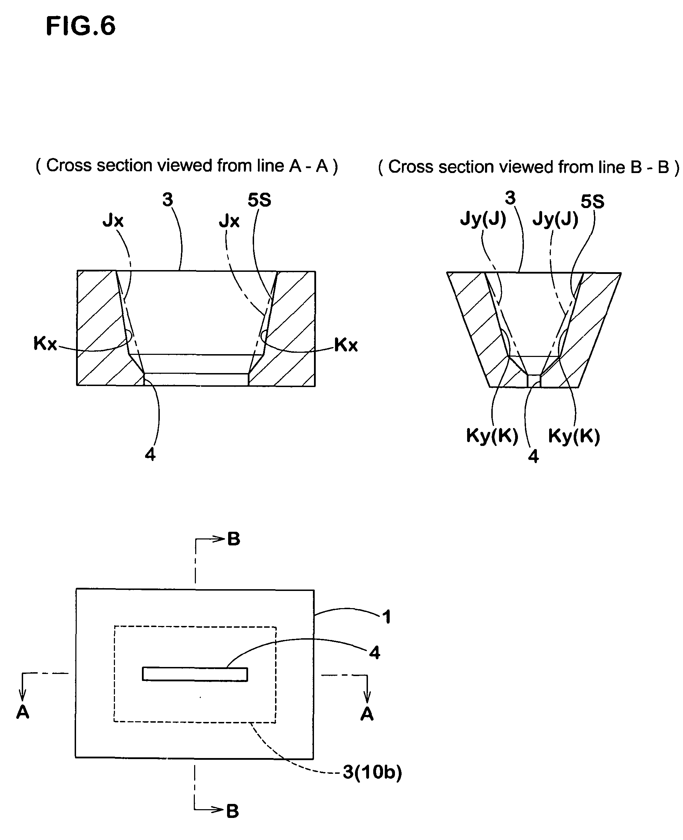

Next, illustrated in FIG. 6 is the die 1 of a second embodiment, in which the profile lines Ky and Kx of the vertical cross section and the horizontal cross section of the inner wall surface 5S along the rubber flow path 5, pass through areas outside the reference lines Jy and Jx, respectively. With the die 1 of the second embodiment, not only the effect on the flow of rubber due to friction between rubber and upper/lower surfaces of the inner wall surface 5S along the rubber flow path 5, but also the effect on the flow of rubber due to friction between rubber and left/right surfaces of the inner wall surface 5S can be reduced. Therefore, a further uniform flow of rubber can be achieved.

Here, the description of the profile line Ky in the vertical cross section is omitted, since it is similar to the profile line Ky of the first embodiment. In addition, similar to the profile line Ky of the first embodiment, a bent line, a composite curve, or an arch-shaped curved line can be adopted as the profile line Kx of the horizontal cross section.

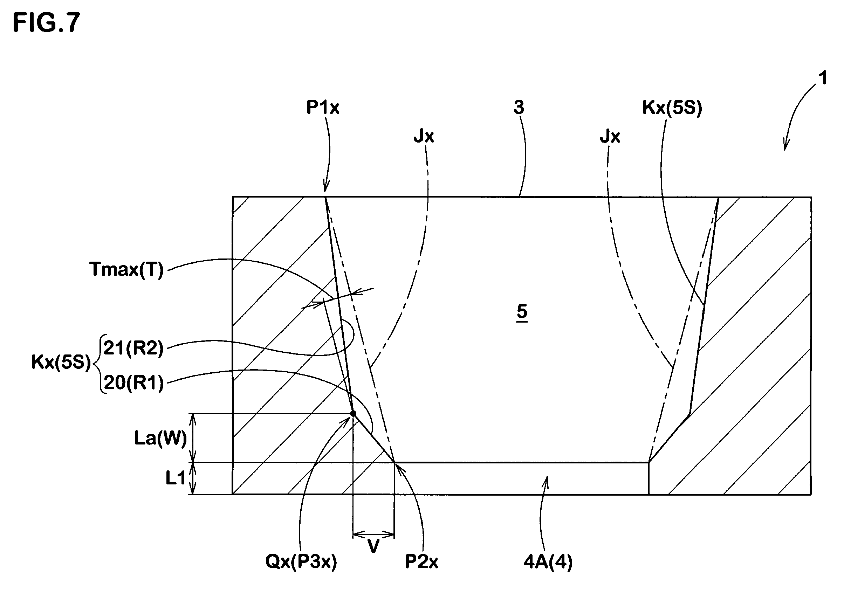

in the case with a bent line, as shown in FIG. 7, a dividing point P3x divides the area between a front end point P2x and a rear end point P1x into the front area R1 and the rear area R2, and the profile line Kx is formed by a profile line in the front area R1 consisting of a front inclined line portion 20 which linearly extends from the front end point P2x to the dividing point P3x, and a profile line of the rear area R2 consisting of a rear inclined line portion 21 which linearly extends from the dividing point P3x to the rear end point P1x. A maximum distance point Qx at which the profile line Kx becomes most distant from the reference line Jx, is used as the dividing point P3x. Also in this case, a distance v in the horizontal direction of an interval between the front end point P2x and the dividing point P3x, is preferably equal to or larger than a distance w (which corresponds to the distance La) in the rubber-extruding direction of the interval. When v ≥ w is satisfied, since the cross-sectional area of the flow path is increased further toward the side of the forming opening section 4, the effect of friction on the flow of rubber can be reduced. The distance N in the rubber-extruding direction of the maximum distance point Qy in the vertical cross section, and the distance W in the rubber-extruding direction of the maximum distance point Qx in the horizontal cross section, are configured as equal.

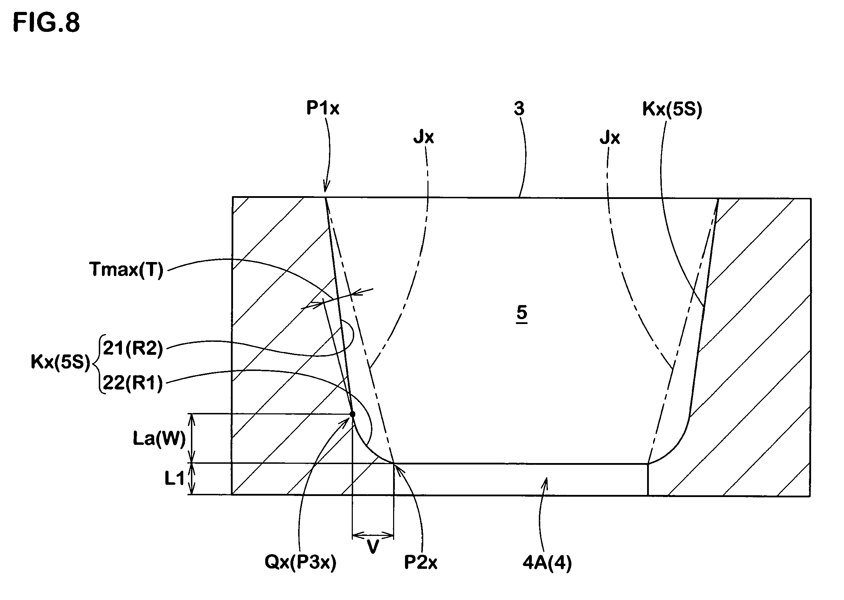

Furthermore, in the case with a composite curve, as shown in FIG. 8, instead of the front inclined line portion 20, the profile line in the front area R1 is formed by a front arc curved-line portion 22 which extends from the front end point P2x to the dividing point P3x in a convex arc shape having the center of the arc on the rubber flow path 5 side. Also in this case, from the standpoint of being able to reduce the effect of friction on the flow of rubber, the distance V in the vertical direction of an interval between the front end point P2x and the dividing point P3x, is preferably equal to or larger than the distance w in the rubber-extruding direction of the interval. In addition, the front arc curved-line portion 22 is preferably smoothly connected to the rear inclined line portion 21.

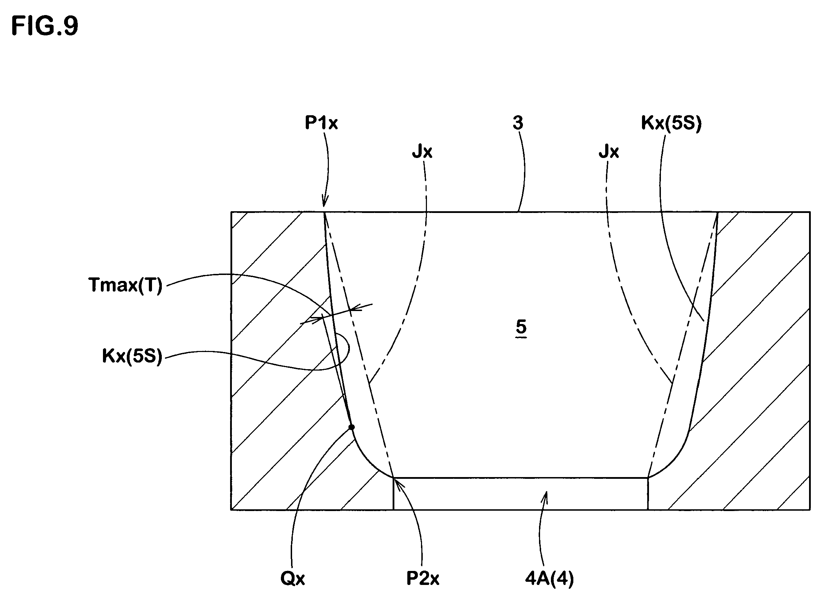

Furthermore, in the case with an arch-shaped curved line, as shown in FIG. 9, the profile line Kx is formed by an arch-shaped curved line which smoothly extends backward in the rubber-extruding direction from the front end point P2x to the rear end point P1x in a convex arc shape, while a curvature radius of the arch-shaped curved line increases as the arch-shaped curved line extends from the front end point P2x to the rear end point P1x. Suitable examples of the arch-shaped curved line include an ellipse, a parabola, an involute curve, or the like; and besides these curves, one obtained by connecting multiple arcs having different curvature radii can also be used.

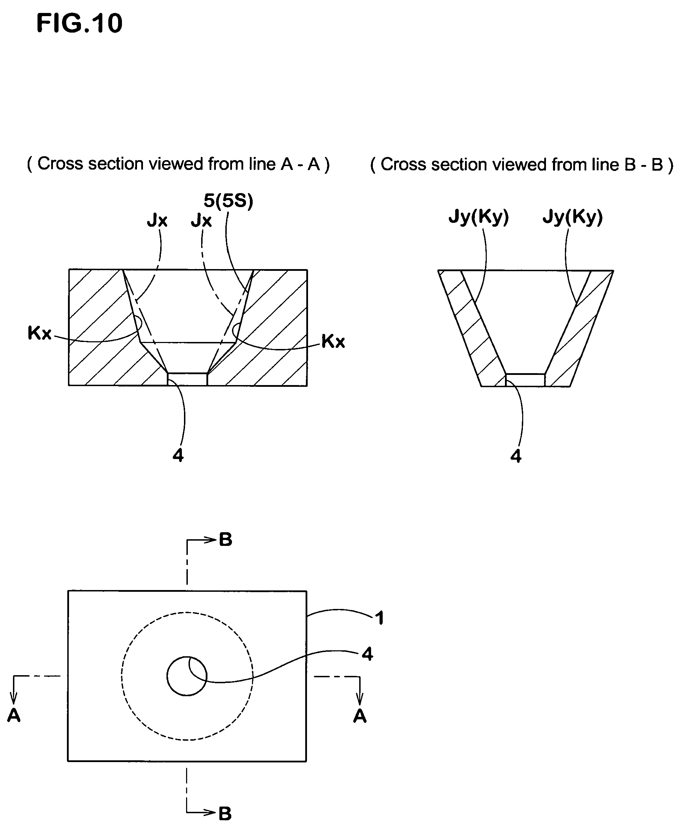

Illustrated in FIG. 10 is the die 1 of a third embodiment. In the third embodiment, only the profile line Kx of the inner wall surface 5S along the rubber flow path 5 in the horizontal cross section passes through an area outside the reference line Jx; and the profile line Ky of the inner wall surface 5S along the rubber flow path 5 in the vertical cross section is formed along the reference line Jy. Here, suitably used as a cross-sectional shape of the rubber member G1 in the die 1 is a circular or square cross section with an aspect ratio of 1, a cross section with a high aspect ratio that is close to 1, a vertically long cross-sectional shape with an aspect ratio that exceeds 1, or the like.

since the profile line Kx here is similar to the profile line Kx in the second embodiment, its description is omitted.

Although the preferred embodiments of the present invention have been described in detail above, the present invention is not limited to the above embodiments shown in the drawings, and various modifications can be made to practice the present invention.

### EXAMPLES

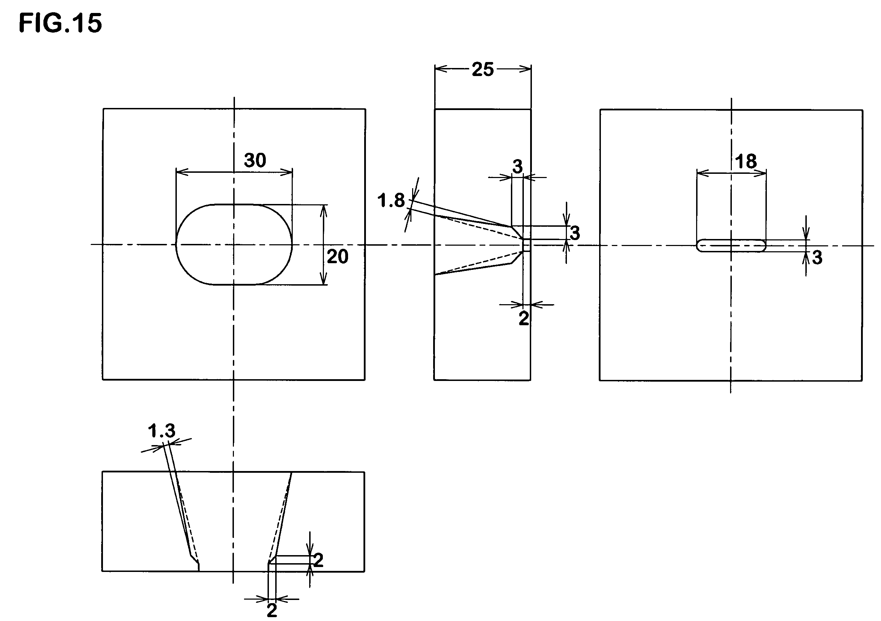

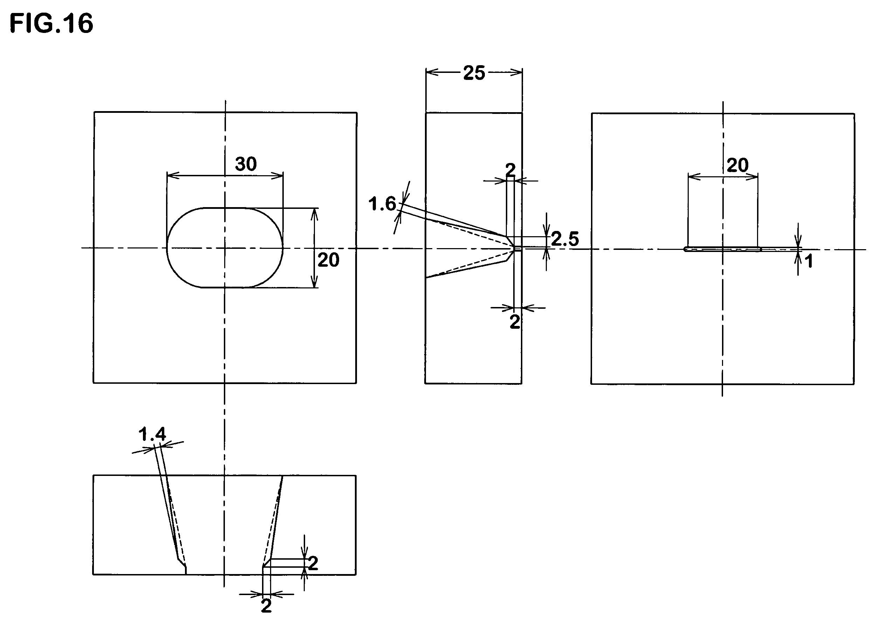

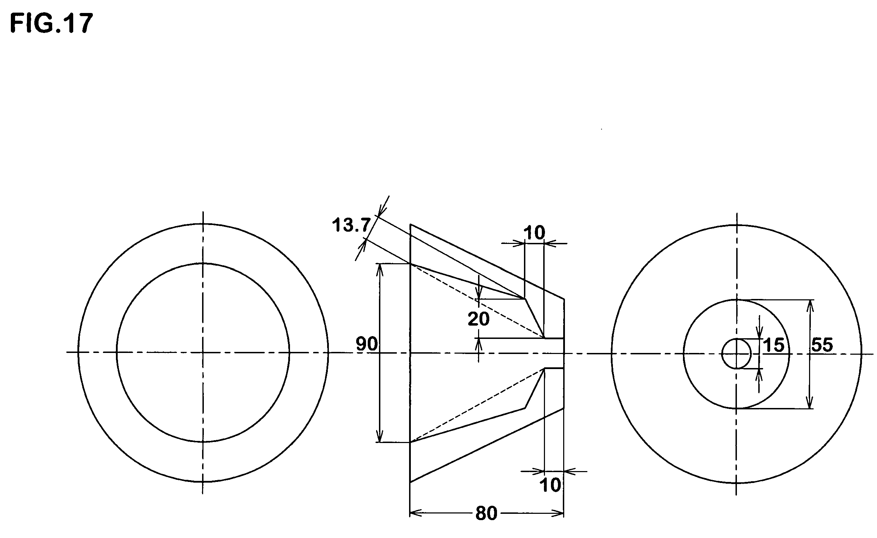

In order to confirm the advantageous effects of the present invention, prototypes of dies having structures of the present invention were produced based on the specifications according to TABLE 1, and all the dies were respectively mounted on the screw-type rubber extruder shown in FIG. 1 and rubber members were formed by extrusion. Opening shapes and dimensions of the forming opening section and the inflow opening section of each of the dies are shown in FIG. 15 to FIG. 17.
Furthermore, post-extrusion appearances of the rubber members upon being extruded and formed by using each of the dies, and appearances of cut surfaces obtained by cutting the rubber members orthogonal to the extruding direction, are compared to those (of conventional examples) obtained by using a conventionally structured die.
(1) The appearances upon extrusion were evaluated by the following three criteria.
   ○ --- No deformations.
   Δ --- slightly deformed but not problematic.
   x --- Largely deformed and highly problematic.
   The condition upon extrusion is briefly reviewed in parentheses.
   *1 -- After extrusion, stable and has no tendency to curve.
   *2 -- wrinkles tend to be generated at the center when extrusion speed is increased.
   *3 -- Wrinkles are generated at the center (FIG. 14 (C)).
   *4 -- After extrusion, stable and has no tendency to curve.
(2) The appearances of the cut surfaces were evaluated by the following three criteria.
   However, cut surfaces of the rubber members of Example B1 and Conventional Example B were too thin to observe the appearances of deformations. Furthermore, the rubber member of Conventional Example A had an inferior appearance upon extrusion and evaluation of a cut surface could not be conducted.
   ○ --- No deformations.
   Δ --- Slightly deformed but not problematic.
   x --- Largely deformed and highly problematic.
   The condition of the cut surface is briefly reviewed in parentheses.
   *5 -- The center is slightly swollen, and bareness (concaved portion) is not likely to be generated at the time of press molding.
   *6 - The center is concaved, and defects due to bareness (concaved portion) are generated at the time of press molding.

**TABLE 1**

| | A | | | | B | | | C | |
|---|---|---|---|---|---|---|---|---|---|
| | Example A1 | Example A2 | Example A3 | Conventional Example A | Example B 1 | Example B2 | Conventional Example B | Example C1 | Conventional Example C |
| <Die> | | | | | | | | | |
| Opening shape | FIG 15 | | | | FIG 16 | | | FIG 17 | |
| Size of Opening of Forming opening section (width x height) <mm> | 18 x 3 | | | | 20 x 1 | | | ø15 | |
| Size of Opening of Inflow opening section (width x height) <mm> | 30 x 20 | | | | 30x20 | | | ø90 | |
| Length L1 of Constant cross-sectional shape portion <mm> | 2 | | | | 2 | | | 10 | |
| Rubber flow path | | | | | | | | | |
| · Contour line of Vertical cross section | Bent line Solid line in FIG.15 | Bent line Solid line in FIG.15 | Straight line Dashed line in FIG.15 | Straight line Dashed line inFIG.15 | Bent line Solid line in FIG.16 | Bent line Solid line in FIG.16 | Straight line Dashed line in FIG.16 | Bent line Solid line in FIG.17 | Straight line Dashed line in FIG.17 |
| ··· Maximum distance Tmax <mm> | 1.8 | 1.8 | --- | --- | 1.6 | 1.6 | --- | 13.7 | --- |
| ··· Distance M <mm> | 3 | 3 | --- | --- | 2.5 | 2.5 | --- | 20 | --- |
| ··· Distance Y <mm> | 3 | 3 | --- | --- | 2 | 2 | --- | 10 | --- |
| ··· Total length of Die LO <mm> | 25 | 25 | 25 | 25 | 25 | 25 | 25 | 80 | 80 |
| · Contour line of Horizontal cross section | Straight line Dashed line in FIG. 15 | Bent line Solid line in FIG 15 | Bent line Solid line in FIG.15 | Straight line Dashed line in FIG.15 | Straight line Dashed line in FIG.16 | Bent line Solid line in FIG.16 | Straight line Dashed line in FIG.16 | Straight line Dashed line in FIG.17 | Straight line Dashed line in FIG.17 |
| ··· Maximum distance Tmax <mm> | --- | 1.3 | 1.3 | --- | --- | 1.4 | --- | --- | --- |
| ··· Distance V <mm> | --- | 2 | 2 | --- | --- | 2 | --- | --- | --- |
| ··· Distance W <mm> | --- | 2 | 2 | --- | --- | 2 | --- | --- | --- |
| | | | | | | | | | |
| Appearance upon extrusion | ○ | ○ | Δ - ○ | **X** | Δ - ○ | ○ | **X** | ○ | ○ |
| | | (*1) | (*2) | (*3) | (*2) | (*4) | (*3) | (*1) | |
| Appearance of Cut surface | ○ | ○ | ○ | --- | --- | ○ | --- | ○ | **X** |
| | | | | | | | | (*5) | (*6) |

It can be observed in the Examples that the effect of friction between the inner wall surface along the rubber flow path and rubber on the flow of rubber can be reduced, and deformation of the rubber member upon extrusion can be reduced.

## Claims

1. A rubber extrusion die (1) comprising:
an inflow opening section (3) through which rubber extruded from a rubber extruder (2) flows;
a forming opening section (4) which forms rubber inflowing from the inflow opening section (3) and which discharges the rubber (G) as a rubber member (G1) having a predefined cross-sectional shape; and
a rubber flow path (5) extending from the inflow opening section (3) to the forming opening section (4) in a forward rubber-extruding direction, the cross-sectional area of the flow path (5) decreasing in the forward rubber-extruding direction, wherein
in a vertical cross section and/or a horizontal cross section in the rubber-extruding direction of the rubber flow path,
a profile line (K) of an inner wall surface (5S) along the rubber flow path (5) passes through an area outside a reference line (J) which is a straight line between a rear end point P1, where the inflow opening section (3) intersects the profile line (K), and a front end point P2, where the forming opening section (4) intersects the profile line (K), which passing results in a larger cross-sectional area of the rubber flow path (5) than that obtained by the reference line (J),
wherein the profile line (K) of the inner wall surface (5S) includes a dividing point P3 which divides an area between the front end point P2 and the rear end point P1 into a front area (R1) and a rear area (R2);
a profile line of the front area (R1) consists of a front inclined line portion (15) which linearly extends from the front end point P2 to the dividing point P3, and a profile line of the rear area (R2) consists of a rear inclined line portion (16) which linearly extends from the dividing point P3 to the rear end point P1; and
in the front inclined line portion (15), a distance M in the vertical direction of an interval between the front end point P2 and the dividing point P3, is equal to or larger than a distance N in the rubber-extruding direction of the interval,
**characterized in that**
a maximum distance (Tmax) from the reference line (J) to the profile line (K) is equal to or larger than 0.4 times of a distance (La) from the dividing point P3 to the front end point P2 in the rubber-extruding direction.

2. The rubber extrusion die according to claim 1, wherein the forming opening section (4) includes a constant cross-sectional shape portion (4A) which has a cross-sectional shape identical to that of the opening shape of the forming opening section (4) and which linearly extends in the rubber-extruding direction for a length L1 ranging from 2 mm to 10 mm.

3. The rubber extrusion die according to claim 1 or claim 2, wherein, regarding the inner wall surface (5S) of the rubber flow path (5), only a profile line (Ky) of the vertical cross section passes through the area outside the reference line (Jy), which passing results in a larger cross-sectional area of the rubber flow path (5) than that obtained by the reference line (Jy).

4. The rubber extrusion die according to claim 1 or claim 2, wherein, regarding the inner wall surface (5S) of the rubber flow path (5), only a profile line (Kx) of the horizontal cross section passes through the area outside the reference line (Jx), which passing results in a larger cross-sectional area of the rubber flow path (5) than that obtained by the reference line (Jx).

5. The rubber extrusion die according to claim 1 or claim 2, wherein, regarding the inner wall surface (5S) of the rubber flow path (5), in the vertical cross section and the horizontal cross section, respective profile lines (Ky, Kx) pass through the area outside the reference line (Jy, Jx), which passings result in a larger cross-sectional area of the rubber flow path (5) than that obtained by the reference line (Jx, Jx).

## Patentansprüche

1. Kautschukextrusionswerkzeug (1), umfassend:
ein Einströmungsöffnungsteilstück (3), durch das Kautschuk, der aus einem Kautschukextruder (2) extrudiert wird, strömt;
ein Formungsöffnungsteilstück (4), das Kautschuk, der von dem Einströmungsöffnungskautschuk (3) einströmt, formt und das den Kautschuk (G) als ein Kautschukelement (G1), das eine vordefinierte Querschnittsform aufweist, austrägt; und
eine Kautschukströmungsstrecke (5), die sich von dem Einströmungsöffnungsteilstück (3) zu dem Formungsöffnungsteilstück (4) in einer nach vorne gerichteten Kautschukextrusionsrichtung erstreckt, wobei die Querschnittsfläche der Strömungsstrecke (5) in der nach vorne gerichteten Kautschukextrusionsrichtung abnimmt, wobei
in einem vertikalen Querschnitt und/oder einem horizontalen Querschnitt in der Kautschukextrusionsrichtung der Kautschukströmungsstrecke
eine Profillinie (K) einer Innenwandfläche (5S) entlang der Kautschukströmungsstrecke (5) durch einen Bereich außerhalb einer Bezugslinie (J) verläuft, die eine gerade Linie zwischen einem hinteren Endpunkt P1, an welchem das Einströmungsöffnungsteilstück (3) die Profillinie (K) schneidet, und einem vorderen Endpunkt P2, an welchem das Formungsöffnungsteilstück (4) die Profillinie (K) schneidet, ist, wobei der Verlauf zu einer größeren Querschnittsfläche des Kautschukströmungsbereichs (5) als die führt, die durch die Bezugslinie (J) erhalten wird,
wobei die Profilinie (K) der Innenwandfläche (5S) einen Unterteilungspunkt P3 umfasst, der einen Bereich zwischen dem vorderen Endpunkt P2 und dem hinteren Endpunkt P1 in einen vorderen Bereich (R1) und einen hinteren Bereich (R2) unterteilt;
eine Profillinie des vorderen Bereichs (R1) aus einem vorderen geneigten Linienabschnitt (15) besteht, der sich geradlinig von dem vorderen Endpunkt P2 zu dem Unterteilungspunkt P3 erstreckt, und eine Profillinie des hinteren Bereichs (R2) aus einem hinteren geneigten Linienabschnitt (16) besteht, der sich geradlinig von dem Unterteilungspunkt P3 zu dem hinteren Endpunkt P1 erstreckt; und
in dem vorderen geneigten Linienabschnitt (15) ein Abstand M in der vertikalen Richtung eines Intervalls zwischen dem vorderen Endpunkt P2 und dem Unterteilungspunkt P3 gleich oder größer als ein Abstand N in der Kautschukextrusionsrichtung des Intervalls ist,
**dadurch gekennzeichnet, dass**
ein maximaler Abstand (Tmax) von der Bezugslinie (J) zu der Profillinie (K) gleich wie oder größer als das 0,4-fache eines Abstandes (La) von dem Unterteilungspunkt P3 zu dem vorderen Endpunkt P2 in der Kautschukextrusionsrichtung ist.

2. Kautschukextrusionswerkzeug nach Anspruch 1, wobei das Formungsöffnungsteilstück (4) einen Abschnitt (4A) mit konstanter Querschnittsform umfasst, der eine Querschnittsform identisch mit der der Öffnungsform des Formungsöffnungsteilstücks (4) aufweist, und der sich geradlinig in der Kautschukextrusionsrichtung über eine Länge L1 erstreckt, die in einem Bereich von 2 mm bis 10 mm liegt.

3. Kautschukextrusionswerkzeug nach Anspruch 1 oder Anspruch 2, wobei hinsichtlich der Innenwandfläche (5S) der Kautschukströmungsstrecke (5) nur eine Profillinie (Ky) des vertikalen Querschnitts durch den Bereich auβerhalb der Bezugslinie (Jy) verläuft, wobei der Verlauf zu einer größeren Querschnittsfläche der Kautschukströmungsstrecke (5) als die führt, die durch die Bezugslinie (Jy) erhalten wird.

4. Kautschukextrusionswerkzeug nach Anspruch 1 oder 2, wobei hinsichtlich der Innenwandfläche (5S) der Kautschukströmungsstrecke (5) nur eine Profillinie (Kx) des horizontalen Querschnitts durch den Bereich außerhalb der Bezugslinie (Jx) verläuft, wobei der Verlauf zu einer größeren Querschnittsfläche der Kautschukströmungsstrecke (5) als die führt, die durch die Bezugslinie (Jx) erhalten wird.

5. Kautschukextrusionswerkzeug nach Anspruch 1 oder Anspruch 2, wobei hinsichtlich der Innenwandfläche (5S) der Kautschukströmungsstrecke (5) in dem vertikalen Querschnitt und dem horizontalen Querschnitt jeweilige Profillinien (Ky, Kx) durch einen Bereich außerhalb der Bezugslinie (Jy, Jx) verlaufen, wobei der Verlauf zu einer größeren Querschnittsfläche der Kautschukströmungsstrecke (5) als die führt, die durch die Bezugslinie (Jx, Jx) erhalten wird.

## Revendications

1. Matrice d'extrusion pour caoutchouc (1) comprenant :
une section d'ouverture pour écoulement entrant (3) à travers laquelle s'écoule du caoutchouc extrudé depuis une extrudeuse à caoutchouc (2) ;
une section d'ouverture de mise en forme (4) qui met en forme le caoutchouc s'écoulant depuis la section d'ouverture pour écoulement entrant (3) et qui décharge le caoutchouc (G) comme un élément de caoutchouc (G1) ayant une forme de section transversale prédéfinie ; et un trajet d'écoulement de caoutchouc (5) s'étendant depuis la section d'ouverture pour écoulement entrant (3) jusqu'à la section d'ouverture de mise en forme (4) dans une direction d'extrusion de caoutchouc vers l'avant, l'aire de section transversale du trajet d'écoulement (5) diminuant dans la direction d'extrusion de caoutchouc vers l'avant, dans laquelle
dans une section transversale verticale et/ou dans une section transversale horizontale dans la direction d'extrusion de caoutchouc du trajet d'écoulement de caoutchouc
une ligne de profil (K) d'une surface de paroi intérieure (5S) le long du trajet d'écoulement de caoutchouc (5) passe à travers une zone à l'extérieur d'une ligne de référence (J) qui est une ligne droite entre un point d'extrémité arrière P1, auquel la section d'ouverture pour écoulement entrant (3) recoupe la ligne de profil (K), et un point d'extrémité avant P2, auquel la section d'ouverture de mise en forme (4) recoupe la ligne de profil (K), et ce passage a pour résultat une aire de section transversale plus grande du trajet d'écoulement de caoutchouc (5) que celle obtenue par la ligne de référence (J),
dans laquelle la ligne de profil (K) de la surface de paroi intérieure (5S) inclut un point de division P3 qui divise une zone entre le point d'extrémité avant P2 et le point l'extrémité arrière P1 en une zone avant (R1) et une zone arrière (R2) ;
une ligne de profil de la zone avant (R1) est constituée d'une portion de ligne inclinée avant (15) qui s'étend de manière linéaire depuis le point d'extrémité avant P2 jusqu'au point de division P3, et une ligne de profil de la zone arrière (R2) est constituée d'une portion de ligne inclinée arrière (16) qui s'étend de manière linéaire depuis le point de division P3 jusqu'au point d'extrémité arrière P1; et
dans la portion de ligne inclinée avant (15), une distance M dans la direction verticale d'un intervalle entre le point d'extrémité avant P2 et le point de division P3 est égale ou supérieure à une distance N dans la direction d'extrusion de caoutchouc de l'intervalle,
**caractérisée en ce que**
une distance maximum (Tmax) depuis la ligne de référence (J) jusqu'à la ligne de profil (K) est égale ou supérieure à 0,4 fois une distance (La) depuis le point de division P3 jusqu'au point d'extrémité avant P2 dans la direction d'extrusion de caoutchouc.

2. Matrice d'extrusion pour caoutchouc selon la revendication 1, dans laquelle la section d'ouverture de mise en forme (4) inclut une portion à forme de section transversale constante (4A) qui a une forme de section transversale identique à celle de la forme d'ouverture de la section d'ouverture de mise en forme (4) et qui s'étend de manière linéaire dans la direction d'extrusion de caoutchouc sur une longueur L1 allant de 2 mm à 10 mm.

3. Matrice d'extrusion pour caoutchouc selon la revendication 1 ou 2, dans laquelle, pour ce qui concerne la surface de paroi intérieure (5S) du trajet d'écoulement de caoutchouc (5), seule une ligne de profil (Ky) de la section transversale verticale passe à travers la zone à l'extérieur de la ligne de référence (Jy), et ce passage a pour résultat une aire de section transversale plus grande du trajet d'écoulement de caoutchouc (5) que celle qui est obtenue par la ligne de référence (Jy).

4. Matrice d'extrusion pour caoutchouc selon la revendication 1 ou 2, dans laquelle, pour ce qui concerne la surface de paroi intérieure (5S) du trajet d'écoulement de caoutchouc (5), seule une ligne de profil (Kx) de la section transversale horizontale passe à travers la zone à l'extérieur de la ligne de référence (Jx), et ce passage a pour résultat une aire de section transversale plus grande du trajet d'écoulement de caoutchouc (5) que celle qui est obtenue par la ligne de référence (Jx).

5. Matrice d'extrusion pour caoutchouc selon la revendication 1 ou 2, dans laquelle, pour ce qui concerne la surface de paroi intérieure (5S) du trajet d'écoulement de caoutchouc (5), dans la section transversale verticale et dans la section transversale horizontale, des lignes de profil respectives (Ky, Kx) passent à travers la zone à l'extérieur de la ligne de référence (Jy, Jx), et ce passage a pour résultat une aire de section transversale plus grande du trajet d'écoulement de caoutchouc (5) que celle qui est obtenue par la ligne de référence (Jy, Jx).
